# FASCICULE DE BREVET EUROPEEN

(11) **EP 2 274 660 B1**
(45) Date de publication et mention de la délivrance du brevet: **12.11.2014**
(21) Numéro de dépôt: 09738100.8
(22) Date de dépôt: 27.04.2009
(51) Int. Cl.: G05G 1/08, F16F 9/53, G05G 5/03

(54) **INTERFACE A RETOUR D'EFFORT A SENSATION AMELIORÉE**
KRAFTRÜCKKOPPELUNGSSCHNITTSTELLE MIT VERBESSERTEN WAHRNEHMUNGEN
FORCE-FEEDBACK INTERFACE WITH IMPROVED SENSATIONS

(30) Priorité: 29.04.2008 FR 0852899
(43) Date de publication de la demande: 19.01.2011
(73) Titulaire: Commissariat à l'Énergie Atomique et aux Énergies Alternatives, 75015 Paris (FR)
(72) Inventeur: PERIQUET, Florian, F-54520 Laxou (FR); ROSELIER, Samuel, F-92340 Bourg La Reine (FR); LOZADA, José, F-91300 Massy (FR); HAFEZ, Moustapha, F-94110 Arcueil (FR)
(74) Mandataire: Ilgart, Jean-Christophe
(86) Numéro de dépôt international: PCT/EP2009/055039
(87) Numéro de publication internationale: WO 2009/133056

(56) Documents cités:
- EP-A- 1 168 622
- WO-A-2005/073833
- DE-A1-102004 041 690
- DE-A1-102006 012 807
- DE-B3-102005 060 933
- JP-A- 2002 189 559
- US-A1- 2001 041 637
- US-A1- 2007 013 215

## Description

### DOMAINE TECHNIQUE ET ART ANTÉRIEUR

La présente invention se rapporte aux interfaces sensorielles offrant un retour d'effort à l'utilisateur, utilisées en particulier dans le domaine des dispositifs haptiques et dans les domaines de la réalité virtuelle et de l'automobile.

Ce type d'interface haptique est par exemple utilisé dans les véhicules automobiles, formant une interface haptique embarquée assistant le conducteur automobile. Cette interface revêt la forme d'un bouton rotatif à retour d'effort, et permet à l'utilisateur d'interagir avec différents équipements ou accessoires du véhicule comme le GPS (Global Positioning System en terminologie anglaise ou Système de positionnement mondial), la radio, la climatisation...

Un tel bouton est actuellement utilisé dans les véhicules automobiles haut de gamme.

Ce bouton ne possède pas de retour sensoriel en effort. En effet, la résistance ressentie par l'utilisateur pour passer d'un cran à un autre est invariable, celle-ci étant prédéfinie lors de la conception du bouton. Ainsi, l'effort en retour a une intensité constante indépendamment de la vitesse de manipulation du bouton ou du type de commande souhaité.

La résistance appliquée par le bouton est obtenue au moyen d'un moteur à courant continu associé à des réducteurs. D'une part, ce type de générateur de résistance ne permet pas d'offrir une grande sensibilité dans l'effort ressenti par l'utilisateur. D'autre part, il est encombrant et d'une masse non négligeable. Ce qui limite son application dans des systèmes embarqués.

Il existe également des interfaces haptiques, dans lesquelles le retour d'effort est obtenu en utilisant un fluide magnéto-rhéologique. En appliquant un champ magnétique à ce fluide, la viscosité apparente de celui-ci augmente et permet d'exercer un effort de freinage à un élément solidaire du bouton et baignant dans ce fluide. De telles interfaces sont décrites dans le document US 2002/0057152. Cependant, dans le cas d'une application dans un système embarqué, les interfaces connues ne permettent pas, dans la structure connue, d'aboutir à un compromis intéressant entre leur encombrement, le couple résistant fourni par le bouton, et la consommation électrique pour générer le champ magnétique dans le fluide magnéto-rhéologique.

C'est par conséquent un but de la présente invention d'offrir une interface haptique à retour d'effort offrant une large plage de couple résistant dans un volume réduit et dont la consommation électrique est adaptée à des applications embarquées.

C'est également un but de la présente invention d'offrir une interface haptique à retour d'effort formant un outil interactif, convivial, intuitif et performant.

### EXPOSÉ DE L'INVENTION

Les buts précédemment énoncés sont atteints par une interface haptique dans laquelle la résistance au mouvement d'un bouton manipulé par un utilisateur est générée au moyen d'un fluide magnéto-rhéologique, la modification de la viscosité apparente de celui-ci étant obtenue au moyen d'un circuit magnétique comportant un ou plusieurs aimants permanents associés à un système de génération d'un champ magnétique variable.

Ainsi une résistance est appliquée en l'absence d'alimentation électrique, contrairement aux interfaces à fluide magnéto-rhéologique de l'état de la technique. Par ailleurs, il est possible d'annuler ou de renforcer le champ magnétique de l'aimant permanent par le système de génération d'un champ magnétique variable, ce qui permet d'avoir une large plage de couples résistants, adaptables à chaque type d'actionnement de l'interface, contrairement aux interfaces actuelles avec moteurs électriques, dont les efforts de retour sont figés.

Par exemple, le champ magnétique généré par l'aimant est suffisant pour que la viscosité apparente du fluide soit telle que le mouvement du bouton soit empêché, verrouillant ainsi l'interface en l'absence de courant. L'interface est déverrouillée par application d'un champ magnétique au moyen du système de génération d'un champ magnétique variable. Ceci évite, à l'inverse des interfaces existantes, d'alimenter en permanence le système de génération de champ magnétique pour bloquer le bouton, ou de prévoir un mécanisme complexe pour verrouiller et déverrouiller le bouton, rendant l'utilisation de l'interface moins conviviale et intuitive.

Cette large gamme de couples résistants est par ailleurs obtenue pour une consommation électrique réduite, puisque une partie ou la totalité du champ magnétique requise pour produire l'effort résistant maximal est généré sans consommation électrique par l'aimant permanent, tout en limitant l'encombrement.

Par ailleurs, grâce à l'invention, on peut conserver une plage d'actionnement identique à celle des interfaces existantes mais dont la consommation électrique est réduite. La puissance électrique est utilisée, soit pour générer un champ magnétique qui vient s'ajouter à celui de l'aimant augmentant ainsi l'amplitude du couple ressenti, soit pour générer un champ magnétique opposé à celui de l'aimant, ce qui annule l'effet de celui-ci. Pour une puissance électrique donnée, la plage d'utilisation est doublée.

L'interface haptique développée permet donc un contrôle semi-actif du bouton en effort pour générer différentes sensations, et ce par l'intermédiaire d'un fluide magnéto-rhéologique tout en offrant un encombrement et une consommation électrique réduits. On entend par « système semi-actif », un système formant un compromis entre un système « actif » et un système « passif ». Il peut être contrôlé en temps réel mais ne peut pas injecter de l'énergie dans le système commandé. Il contrôle le retour haptique ressenti par l'utilisateur par réaction en absorbant/dissipant de l'énergie selon une loi de commande prédéfinie.

Dans un exemple particulièrement avantageux, l'élément d'interaction comporte un élément cylindrique à section circulaire et les moyens de génération d'un champ magnétique génèrent un champ radial par rapport à cet élément d'interaction.

La présente invention a alors principalement pour objet une interface haptique comportant un élément d'interaction avec un utilisateur, un arbre de rotation duquel est solidaire en rotation ledit élément d'interaction avec l'utilisateur, un élément d'interaction avec un fluide, ledit élément d'interaction avec le fluide étant solidaire en rotation dudit arbre, ledit fluide étant du type magnéto-rhéologique, un système de génération d'un champ magnétique dans ledit fluide, et une unité de commande apte à générer des ordres audit système de génération de champ magnétique de modifier le champ magnétique, ledit système comportant des moyens de génération d'un champ magnétique variable et des moyens de génération d'un champ magnétique permanent.

L'interface haptique selon l'invention peut comporter au moins un capteur de position angulaire, de vitesse angulaire et/ou d'accélération angulaire dudit arbre, ladite unité de commande générant les ordres en fonction des informations fournies par ledit au moins un capteur de position, de vitesse et/ou d'accélération angulaire.

Dans un autre exemple, l'unité de commande génère des ordres au système de génération de champ magnétique à des intervalles de temps donnés fixes ou variables.

Ledit système de génération de champ magnétique génère avantageusement un champ magnétique radial, ce qui permet d'augmenter les efforts d'amortissement.

Les moyens de génération d'un champ magnétique permanent comportent, par exemple au moins un aimant permanent ; et les moyens de génération d'un champ magnétique variable comportent par exemple au moins une bobine électromagnétique. Ces deux éléments sont associés à un circuit magnétique fabriqué en matériaux ferromagnétique. L'axe de la bobine est avantageusement confondu avec celui de l'arbre de rotation.

Par exemple, l'élément d'interaction avec le fluide comporte au moins une paroi cylindrique de révolution d'axe longitudinal et un fond, ledit fond étant fixé à l'arbre de rotation, le fluide venant en contact sur une face intérieure et une face extérieure de ladite paroi latérale. De manière avantageuse, l'élément d'interaction avec le fluide comporte plusieurs parois latérales concentriques espacées les unes des autres et solidaires du fond, ce qui augmente les efforts de cisaillement appliqués au fluide.

Dans un exemple de réalisation, les moyens de génération d'un champ magnétique permanent sont disposés à l'intérieur de l'élément d'interaction avec le fluide, immobiles par rapport à celui-ci et dans laquelle les moyens de génération d'un champ magnétique variable sont disposés à l'intérieur de l'élément d'interaction avec le fluide, immobiles par rapport à celui-ci. La bobine peut alors entourer l'aimant permanent.

Dans une variante, l'aimant permanent peut être formé d'au moins un manchon entourant la bobine

Dans une autre variante, les moyens de génération d'un champ magnétique permanent sont disposés entre deux parois latérales concentriques de l'élément d'interaction et sont immobiles par rapport à celles-ci.

Dans une autre variante encore, les moyens de génération d'un champ magnétique permanent sont fixés sur l'élément d'interaction avec le fluide et les moyens de génération d'un champ magnétique variable sont immobiles par rapport à celui-ci.

On peut également prévoir que les moyens de génération d'un champ magnétique variable sont disposés à l'intérieur de l'élément d'interaction et immobiles par rapport à celui-ci.

Les moyens de génération d'un champ magnétique permanent et les moyens de génération d'un champ magnétique variable peuvent également être fixés sur l'élément d'interaction avec le fluide.

Dans un autre exemple de réalisation, l'arbre traverse le système de génération de champ magnétique.

Le capteur de position peut, par exemple être prévu à une extrémité longitudinale de l'arbre et comporter une partie solidaire en rotation de l'arbre et une partie immobile par rapport à l'arbre. La partie solidaire de l'arbre peut alors être une roue optique et la partie immobile une fourche optique.

De manière avantageuse, l'interface selon l'invention comporte une tige traversant de part en part l'arbre, ladite tige étant est apte à se déplacer longitudinalement et un dispositif de détection du déplacement de ladite tige.

L'interface peut également comporter un dispositif thermique apte à modifier la température de l'élément d'interaction avec l'utilisateur, le dispositif thermique comportant au moins une cellule Pelletier et / ou un dispositif apte à faire vibrer l'élément d'interaction avec l'utilisateur.

La présente invention a également pour objet un ensemble haptique comportant un châssis et l'interface selon la présente invention montée sur ce châssis, ladite interface étant mobile selon l'axe de l'arbre.

L'interface peut être mobile en translation selon au moins une direction orthogonale à l'axe longitudinal, et / ou est mobile en rotation autour d'au moins une direction orthogonale à l'axe longitudinal.

L'ensemble haptique selon l'invention peut comporter des dispositifs à retour d'effort pour opposer une résistance lors d'un mouvement le long au moins d'un axe orthogonal à l'axe longitudinal ou autour de celui-ci.

### BRÈVE DESCRIPTION DES DESSINS

La présente invention sera mieux comprise à l'aide de la description qui va suivre et des dessins en annexe sur lesquels :
- la figure 1A est une vue en coupe longitudinale schématique d'un premier exemple de réalisation d'une interface haptique selon la présente invention,
- la figure 1B est une vue en coupe longitudinale d'une réalisation industrielle de l'interface de la figure 1A, représentée en perspective,
- la figure 2 est une vue en coupe longitudinale d'une première variante de réalisation de l'interface de la figure 1, dans laquelle l'aimant permanent est mobile,
- la figure 3 est une demi-vue en coupe longitudinale d'une deuxième variante de réalisation de l'interface de la figure 1,
- la figure 4 est une demi-vue en coupe longitudinale d'un deuxième exemple de réalisation d'une interface haptique selon la présente invention, dans lequel l'arbre de rotation du bouton traverse le stator interne,
- les figures 5 à 9 sont des demi-vues en coupe longitudinale de variantes de réalisation de l'interface de la figure 4 dans lesquelles l'arbre de rotation du bouton traverse le stator interne,
- la figure 10 est une vue en coupe longitudinale d'une interface identique à celle de la figure 4 intégrant un déplacement longitudinal du bouton. L'arbre est creux et permet de positionner un bouton de type clic en dessous de l'arbre.
- les figures 11 et 12 sont différentes variantes de réalisation d'un troisième exemple de réalisation d'une interface selon l'invention,
- les figures 13 et 14 sont des vues en perspective d'une interface selon l'invention associée à un dispositif de translation et de rotation respectivement.

### EXPOSÉ DÉTAILLÉ DE MODES DE RÉALISATION PARTICULIERS

Nous allons maintenant décrire en détail des exemples de réalisation de l'interface haptique selon la présente invention.

L'interface haptique présente au moins un degré de rotation autour d'un axe X formant généralement un axe de révolution pour l'interface.

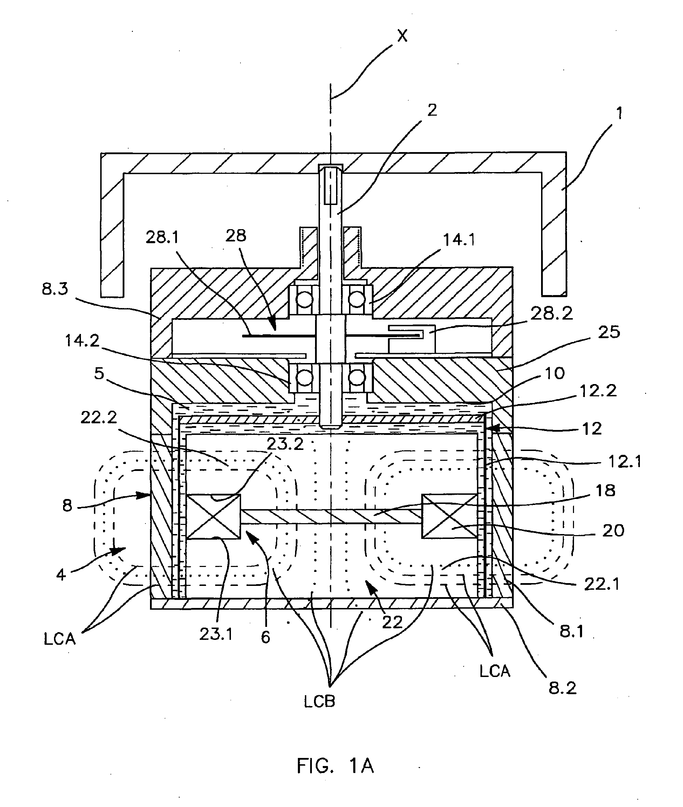

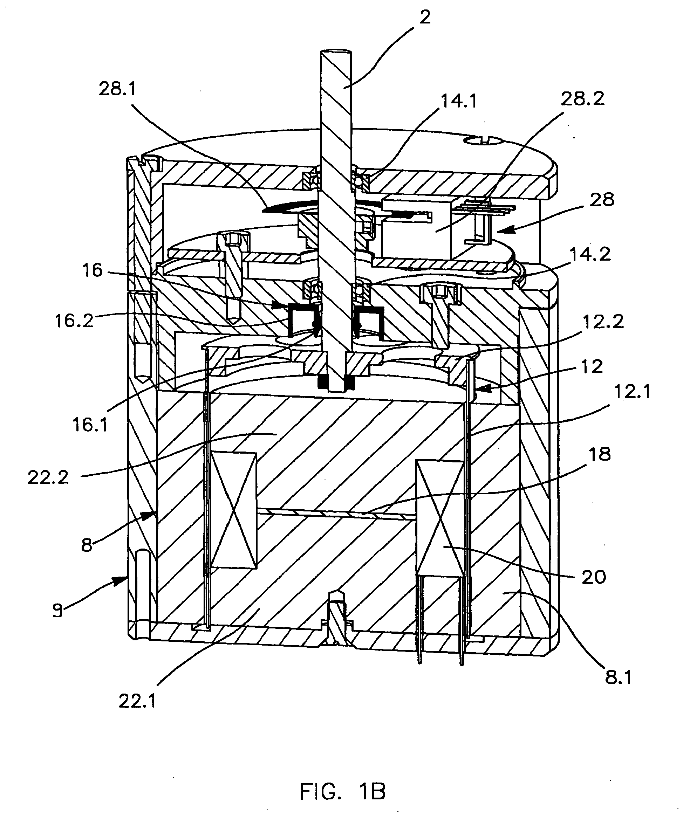

Sur les figures 1A et 1B, on peut voir un premier exemple de réalisation d'une interface selon l'invention comportant un élément 1 destiné à être manipulé par un utilisateur et qui sera désigné par la suite « bouton », ce bouton est monté mobile en rotation sur un arbre 2 d'axe X, et un dispositif de génération d'effort résistant 4 s'opposant à la rotation de l'arbre 2.

Le dispositif 4 comporte un fluide dont on peut modifier les caractéristiques au moyen d'un champ magnétique et un système de génération d'un champ magnétique 6 reçus dans un boîtier 8. Le fluide est par exemple un liquide magnéto-rhéologique 5.

Le boîtier 8 de forme cylindrique est formé par une paroi latérale 8.1, un fond inférieur 8.2 et un fond supérieur 8.3.

L'arbre 2 traverse le fond supérieur 8.3 et pénètre à l'intérieur du boîtier 8.

Le boîtier 8 délimite une chambre étanche 10 confinant le fluide magnéto-rhéologique 5, cette chambre étant soumise à un champ magnétique généré par le système 6.

Le dispositif 4 comporte également un élément 12 solidaire en rotation de l'arbre 2 et logé dans la chambre étanche 10. Cet élément est apte à interagir avec le fluide magnéto-rhéologique 5, la rotation de l'élément 12 étant plus ou moins freinée par le fluide magnéto-rhéologique 5 en fonction de sa viscosité apparente.

Dans l'exemple représenté, L'élément 12 a la forme d'une cloche cylindrique de section transversale circulaire formée d'une paroi latérale 12.1 et d'un fond 12.2. La chambre étanche a une forme correspondant à celle de la cloche 12, ce qui permet de réduire la quantité de fluide nécessaire. En coupe longitudinale, l'élément 12 interagissant avec le fluide a la forme d'un U renversé.

Le fond 12.2 est fixé sur l'extrémité de l'arbre 2 pénétrant dans la chambre étanche 10, ainsi que la chambre 10.

La paroi latérale 12.1 est en matériau apte à conduire un champ magnétique, avantageusement en matériau ferromagnétique, ainsi la perméabilité magnétique de la paroi latérale est réduite, améliorant la conduction du champ magnétique.

Dans l'exemple représenté, la chambre étanche 10 est complètement remplie de fluide magnéto-rhéologique 5. La cloche 12 est donc complètement immergée dans le fluide magnéto-rhéologique 5. Plus particulièrement, les faces intérieure et extérieure de la paroi 12.1 sont en contact avec le fluide magnéto-rhéologique 5. Mais on pourrait prévoir que seule la paroi latérale 12.1 soit immergée dans le fluide magnéto-rhéologique 5.

L'arbre 2 est supporté par des paliers 14.1, 14.2, isolés de manière étanche du fluide magnéto-rhéologique 5. Un élément d'étanchéité 16, visible sur la figure 1B, est prévu entre la chambre étanche 10 et la zone contenant les paliers 14.1, 14.2. Le moyen d'étanchéité entoure l'arbre de rotation 2, celui-ci comporte une lèvre intérieure 16.1 bordant l'arbre de rotation 2 et assurant une étanchéité dynamique et une lèvre extérieure 16.2 en contact statique avec le boîtier. L'étanchéité peut être assurée par tout autre type de joint, classique ou non, comme par exemple un ferrofluide maintenu en place à l'aide d'un aimant permanent.

Le système de génération de champ magnétique 6 est apte à générer un champ magnétique variable de manière à faire varier la viscosité du fluide magnéto-rhéologique 5.

Selon la présente invention, le système 6 comporte un moyen 18 apte à générer un champ magnétique permanent en l'absence d'alimentation électrique, par exemple un aimant permanent, et un moyen 20 apte à générer un champ magnétique variable.

A des fins de simplicité, le moyen à magnétisation permanente 18 sera désigné par aimant permanent, mais tout autre dispositif offrant une telle magnétisation ne sort pas du cadre de la présente invention.

L'aimant est, dans l'exemple représenté, formé par un disque disposé à l'intérieur de la cloche 12.

Le moyen de génération d'un champ magnétique variable 20 est formé, par exemple par au moins une bobine disposée à l'intérieur de la cloche 12 et entourant l'aimant permanent 20. La ou les bobine(s) a (ont) un axe confondu avec l'axe longitudinal X.

En outre, le système 6 comporte un circuit magnétique pour guider le champ magnétique de manière à ce que les lignes de champ traversent la paroi latérale 12.1 de la cloche 12 et se referment à l'intérieur de la paroi latérale 8.1, afin que le fluide magnéto-rhéologique 5 de part et d'autre de la paroi latérale 12.1 soit effectivement soumis au champ magnétique. De manière générale, l'aimant permanent 18 et la bobine 20 sont aptes à générer un champ magnétique traversant le fluide et se refermant sur l'aimant et la bobine.

Le circuit magnétique comporte une pièce 22 en matériau apte à conduire le champ magnétique formant un noyau, disposée à l'intérieur de la cloche et dans laquelle sont disposés l'aimant permanent 18 et la bobine 20.

Dans l'exemple représenté, le noyau 22 en forme de cylindre régulier comporte une partie inférieure 22.1 et une partie supérieure 22.2, l'aimant et la bobine étant pris en sandwich entre les deux parties 22.1, 22.2.

La chambre 10 est délimitée, d'une part par les faces extérieures du noyau 22, par la paroi latérale extérieure 8.1 et par une paroi de séparation supérieure 25 traversée par l'arbre de rotation 2.

En particulier, dans l'exemple représenté, les parties 22.1, 22.2 comportent chacune un épaulement 23.1, 23.2 défini entre une partie de plus grand diamètre et une partie de plus petit diamètre, l'aimant 18 est disposé entre les extrémités libres des parties de plus petit diamètre et la bobine 20 est montée autour des parties de plus petit diamètre en appui sur les épaulements 23.1, 23.2 par ses deux extrémités axiales.

Le circuit magnétique comporte également la paroi extérieure 8.1 du boîtier 8, formant la paroi extérieure de la chambre étanche 10.

On pourrait prévoir que seule la partie intérieure de la paroi extérieure 8.1 soit en matériau magnétique, et non la paroi 8.1 en entier, ce qui permettrait de confiner davantage le champ magnétique.

Le circuit magnétique est reçu dans une enveloppe 9, formant l'enveloppe extérieure du dispositif haptique.

Le circuit magnétique est également formé par la paroi latérale 12.1 de la cloche 12 réalisé en un matériau apte à conduire un champ magnétique.

Les lignes de champ de l'aimant LCA traversent la partie supérieure 22.1 du noyau, puis la chambre 10 via la paroi latérale 12.1 de la cloche 12, la paroi latérale extérieure 8.1 du boîtier 8, la partie inférieure 22.2 du noyau 22 et se referment sur l'aimant 18.

Les lignes de champ LCB de la bobine 20 empruntent le même circuit magnétique que les lignes de champ magnétique LCA de l'aimant permanent 18.

Cette architecture selon la présente invention permet un très bon guidage du champ magnétique généré par l'aimant 18 et la bobine 20.

Ainsi, il est possible en contrôlant le sens et l'intensité du courant circulant dans la bobine 20 d'amplifier ou alors de réduire, voire d'annuler le champ magnétique produit par l'aimant 18.

Le noyau central 22 et la paroi 8.1 forment un stator, tandis que la cloche 12 destinée à tourner autour de l'axe X forme un rotor.

Avantageusement, la partie supérieure du boîtier recevant les paliers 14.1, 14.2, l'arbre, le fond de la cloche 12.2 sont réalisés en matériau amagnétique, ainsi que le fond inférieur 8.2 du boîtier afin d'éviter la dispersion des lignes de champ.

Il est également prévu des moyens 28 pour mesurer la position angulaire de la cloche 12 et donc du bouton 1. Ces moyens sont, par exemple disposés entre les deux paliers 14.1, 14.2 et sont formés par un capteur de rotation de type codeur optique, formé par une roue codeuse 28.1 solidaire en rotation de l'arbre 2 et d'une fourche optique 28.2 fixée sur le boîtier.

Tout capteur apte à fournir une image logique ou analogique de la position de la cloche 12 entre dans le cadre de la présente invention.

Le capteur 28 est raccordé à une unité de commande (non représentée) à laquelle il transmet ses mesures.

La bobine 20 est, quant à elle, reliée à une source de courant électrique (non représentée) commandée par l'unité de commande afin de faire varier l'intensité et le sens du courant dans la bobine en fonction de la position de la cloche 12, et donc du bouton 1, mesurée par le capteur 28.

Nous allons maintenant expliquer le fonctionnement de cette interface haptique selon la présente invention.

Lorsque l'utilisateur manipule le bouton 1, en particulier lorsqu'il le fait pivoter dans un sens ou dans l'autre autour de l'axe X, le capteur de rotation 28 détecte la rotation de l'arbre 2 et transmet cette information, ainsi que la mesure du déplacement angulaire, de la vitesse angulaire et/ou de l'accélération angulaire de l'arbre 2 et, donc de la cloche 12, à l'unité de commande.

L'unité de commande en fonction des informations reçues génère un ordre à l'alimentation électrique d'envoyer un courant d'une intensité donnée dans un sens donné en fonction de modèles préenregistrés ou en fonction d'une communication avec un système extérieur (comme par exemple le système GPS dans une automobile), à la bobine 20.

Ce courant peut être nul si l'unité de commande estimé que le champ magnétique généré par l'aimant permanent 18 suffit à modifier la viscosité apparente du fluide 5 pour générer des efforts résistants suffisants sur la cloche 12.

Ce courant peut être tel qu'il augmente le champ magnétique, donc la viscosité apparente du fluide et, par conséquent les efforts résistants sur la cloche 12.

Ce courant peut être tel que la bobine 20 génère un champ magnétique de sens opposé à celui du champ magnétique produit par l'aimant permanent 18, l'addition des deux champs donne alors un champ magnétique résultant d'intensité réduite, voire nulle par rapport à celle du champ produit par l'aimant permanent 18 seul.

Les caractéristiques du courant envoyé dans la bobine peuvent également être fonction de la vitesse avec laquelle le bouton 1 est tourné. Le capteur peut être un capteur de déplacement, un capteur de vitesse ou d'accélération. Les informations sur le mouvement sont traitées par l'organe de commande afin de définir la consigne à envoyer à l'organe de puissance.

Grâce à la présente invention, il est possible de générer un effort résistant en l'absence de courant. Ainsi, en choisissant l'aimant permanent, plus particulièrement le champ magnétique qu'il génère, de telle sorte que celui-ci modifie la viscosité apparente du fluide pour que les efforts résistants sur la cloche immobilisent le bouton en rotation, il est alors possible de verrouiller l'interface sans consommer d'électricité.

En outre, en couplant un aimant permanent et une bobine, on atteint des valeurs de champ magnétique importantes, et donc des couples résistants appliqués à la cloche élevés tout en limitant l'encombrement de l'interface et la puissance électrique nécessaire.

Dans le cas de systèmes existants n'utilisant qu'une bobine, l'encombrement est bien plus conséquent pour obtenir les mêmes valeurs de couple résistant.

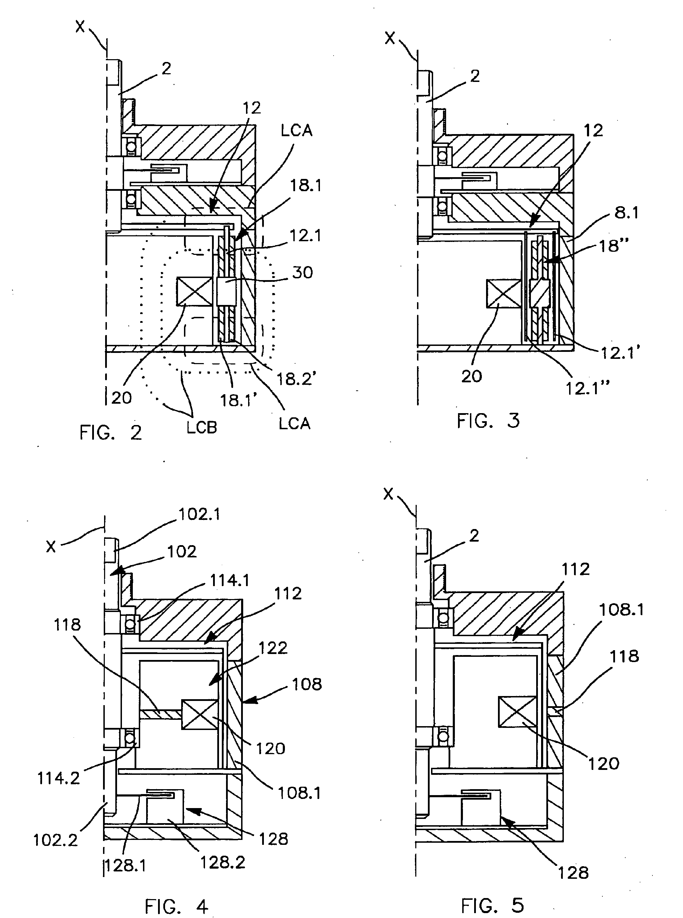

Sur la figure 2, on peut voir une variante de réalisation de l'interface des figures 1A et 1B, dans laquelle l'aimant permanent référencé 18' est embarqué sur la cloche 12.

Plus particulièrement, la cloche 12 comporte des aimants 18.1' sur la face intérieure et des aimants 18.2' sur la face extérieure de sa paroi latérale 12.1. Ceux-ci sont par exemple tubulaires. Dans l'exemple représenté, la cloche comporte une saillie annulaire 30 sensiblement à mi-hauteur de la cloche, les aimants tubulaires 18.1' et 18.2' étant disposés au dessus et au dessous de cette saillie.

On pourrait prévoir de réaliser deux manchons en matériau magnétique permanent s'étendant d'une extrémité à l'autre de la cloche.

Sur la figure 3, on peut voir une autre variante de réalisation de l'interface selon l'invention, dans laquelle la cloche est doublée afin d'augmenter la surface d'interaction avec le fluide.

Dans l'exemple représenté, la cloche 12 comporte une paroi latérale extérieure 12.1' et une paroi latérale intérieure 12.1" cylindriques concentriques solidaires du fond 12.2, et espacées l'une de l'autre pour permettre au fluide de pénétrer entre les deux parois.

Le fluide se trouve de part et d'autre des deux parois concentriques, la surface de cisaillement du fluide est approximativement doublée par rapport à celle de l'interface des figures 1A et 1B. On peut bien entendu prévoir plus de deux parois concentriques, leur nombre dépendant notamment de l'encombrement maximal admissible.

Dans l'exemple représenté, on prévoit de disposer l'aimant permanent 18" entre les deux parois 12.1' et 12.1", celui-ci est identique à celui de la figure 2, cependant il est immobile par rapport à la cloche, puisqu'il est fixé au fond inférieur 8.2 du boîtier 8 et forme un manchon venant s'interposer entre les deux parois 12.1' et 12.1" de la cloche.

On peut également prévoir d'utiliser une cloche dont la jupe est formée de plusieurs parois concentriques dans une structure identique à celle des figures 1A et 1B.

Sur la figure 4, on peut voir un autre exemple de réalisation d'une interface selon la présente invention, cette interface diffère de celle décrite jusqu'à présent en ce que l'arbre de rotation traverse le stator, plus particulièrement le système de génération du champ magnétique.

Les références utilisées pour la description de cet exemple de réalisation seront augmentées de 100 par rapport à celle utilisés pour la description des figures 1A et 1B.

L'interface comporte un arbre 102 d'axe longitudinal X à laquelle est fixée à une première extrémité 102.1 le bouton destiné à être manipulé par l'utilisateur.

L'arbre 102 est monté en rotation dans un boîtier 108 au moyen de paliers 114.1 et 114.2.

Le boîtier 108 forme un stator et l'arbre 102 forme un rotor duquel est solidaire en rotation une cloche 112 baignant dans un fluide dont les propriétés de viscosité peuvent varier avec le champ magnétique.

Par rapport à l'exemple des figures 1A et 1B, l'arbre traverse le noyau central de part en part.

Le capteur de position, de vitesse ou d'accélération 128 est, dans cette représentation, placé à une extrémité inférieure de l'arbre 102.2 opposée à celle à laquelle est fixé le bouton (non représenté). Celui-ci est du même type que décrit précédemment, il comporte, par exemple, une roue codeuse 128.1 et une fourche optique 128.2. Le capteur est isolé du fluide au niveau du palier 114.2.

Le circuit magnétique est similaire à celui de l'exemple des figures 1A et 1B, il comporte un aimant permanent 118 en forme de disque au centre du noyau et une bobine 120.

La paroi latérale 108.1 du boîtier est réalisée en matériau magnétique ainsi que le noyau 122.

Le fonctionnement de cette interface est identique à celui des figures 1A et 1B et ne sera pas repris.

Sur la figure 5, on peut voir une variante de réalisation du deuxième exemple de réalisation de l'interface, dans laquelle l'aimant permanent 118 n'est plus disposé dans le noyau à l'intérieur de la cloche 112, mais dans la paroi latérale 108.1 du boîtier. L'aimant a dans cette configuration la forme d'un anneau prévu radialement en alignement avec la bobine 120 et coaxial avec celle ci. La paroi latérale 108.1 est réalisée en un matériau apte à conduire un champ magnétique.

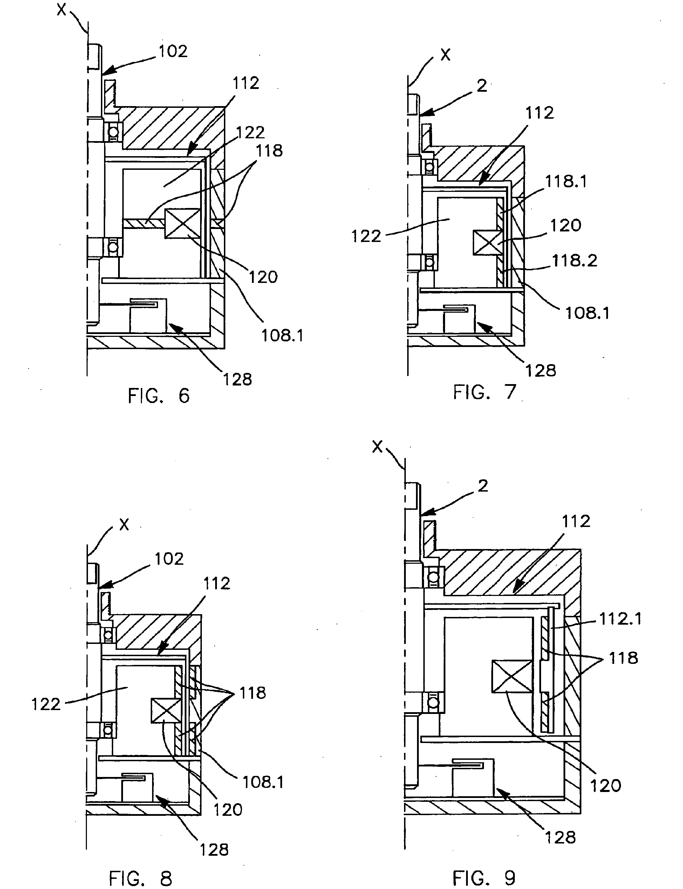

Sur la figure 6, une autre variante de l'interface de la figure 4 est représentée, cette fois-ci l'aimant permanent 118 et prévu à la fois dans le noyau central 122 et dans la paroi latérale 108.1 du boîtier 108.

Sur la figure 7, on peut voir une autre variante de réalisation du deuxième exemple de réalisation, dans laquelle l'aimant permanent 118 est prévu, non plus à l'intérieur du noyau 122, mais à l'extérieur de celui-ci formant son enveloppe extérieure.

Dans l'exemple représenté, le noyau central 122 est d'une seule pièce en matériau magnétique et comporte une rainure annulaire dans laquelle est montée la bobine 120. La bobine 120 fait alors saillie radialement de la périphérie radialement extérieure du noyau.

L'aimant 118, quant à lui, est formé de deux manchons cylindriques 118.1, 118.2 disposés pour l'un au dessus de la bobine et, pour l'autre, au dessous de la bobine.

On peut prévoir de disposer l'aimant permanent 118 dans la paroi latérale 108.1 du boîtier.

D'ailleurs, sur la figure 8, on peut voir une interface dans laquelle des aimants permanents 118 sont prévus à la fois sur la périphérie extérieure du noyau central 122 et dans la paroi latérale 108.1 du boîtier.

La paroi latérale 108.1 est réalisée en un matériau apte à conduire un champ magnétique.

Sur la figure 9, on peut voir une autre variante de réalisation, dans laquelle l'aimant permanent 118 est mobile et est solidaire de la paroi latérale 112.1 de la cloche 112.

Des interfaces selon le deuxième exemple de réalisation comportant une cloche à plusieurs jupes concentriques similaire à celle représentée sur la figure 3 entrent dans le cadre de la présente invention.

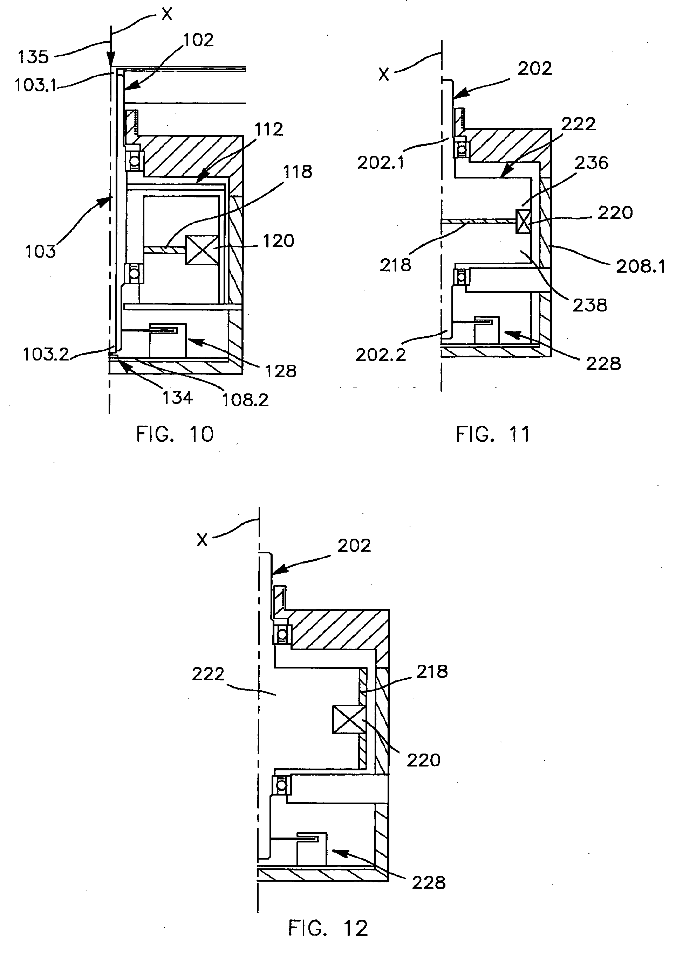

Sur la figure 10, on peut voir l'interface de la figure 4 dans laquelle un degré de liberté a été ajouté au bouton. En effet, le bouton est mobile le long de l'axe X. Pour cela, l'arbre 102 est creux et une tige 103 est montée mobile le long de l'axe X à l'intérieur de l'arbre 102. La tige 103 est solidaire du bouton par une première extrémité axiale 103.1. La tige traverse de part en part l'arbre 102.

La tige 102 et l'arbre sont solidaires en rotation, ainsi une rotation du bouton est transmise à l'arbre par l'intermédiaire de la tige 103.

Un capteur de déplacement axial 134 est prévu pour détecter le déplacement axial de la tige 103. Ce capteur peut par exemple être un contacteur électrique 134 disposé sur le fond inférieur 108.2 du boîtier en regard de la deuxième extrémité longitudinale 103.21 de la tige 103. Lorsque la tige 103 est déplacée axialement vers le bas selon la flèche 135, elle actionne le contacteur 134. Ce contacteur électrique est relié à l'unité de commande et peut, par exemple servir de système de validation.

L'utilisateur peut ainsi d'une seule main sélectionner un onglet dans un menu en déplaçant un curseur par rotation du bouton autour de l'axe X et valider ce choix en enfonçant le bouton provoquant le déplacement axial de la tige 102 et la commutation du contacteur 134.

Le capteur de déplacement axial 134 peut être de tout autre type, par exemple optique ou magnétique.

Dans l'exemple représenté, seul la tige 103 se déplace le long de l'axe X. Cependant, on peut prévoir que toute l'interface formée par le boîtier et le bouton se déplace selon l'axe X.

Ce degré de liberté supplémentaire peut bien entendu être appliqué à tous les exemples de réalisation.

Le deuxième exemple de réalisation est particulièrement adapté au déplacement longitudinal du bouton, puisque la capture de son déplacement est aisée en utilisant le fond inférieur de l'interface qui est inutilisé.

Sur les figures 11 et 12, on peut voir un troisième exemple de réalisation d'une interface selon la présente invention, différant des premier et deuxième exemples de réalisation en ce que l'interface ne comporte plus de cloche interagissant dans le fluide, mais c'est directement le noyau central solidaire en rotation de l'arbre de rotation qui interagit avec le fluide pour subir le freinage.

Les références sont augmentées de 200 par rapport à celles utilisées pour le premier exemple de réalisation.

Comme on peut le voir sur la figure 11, le noyau 222 et l'arbre 202 sont solidaires en rotation, le noyau étant alors entraîné en rotation dans le fluide.

Le noyau 222 comporte une demi partie supérieure 236 munie d'une saillie axiale 202.1 formant la partie de l'arbre 202 fixée au bouton et une demi partie inférieure 238 munie d'une saillie axiale 202.2 de laquelle est solidaire le capteur de position 228. Ces deux demi parties sont solidaires l'une de l'autre, collées ou fixées par tout autre moyen.

L'aimant permanent 218 sous forme de disque est interposé entre la demi partie supérieure 236 et la demi partie inférieure 238. La bobine est embarquée dans le noyau central pivotant avec l'aimant 218.

Sur la figure 12, on peut voir encore une variante, dans laquelle la bobine et l'aimant sont embarqués dans le noyau central pivotant avec l'aimant 218. On pourrait également prévoir que l'aimant permanent 218 soit fixe sur le boîtier et que seule la bobine 220 soit solidaire du noyau central 222.

Il est bien entendu que les nombres de bobines et/ou d'aimants mentionnés dans la description ci-dessus ne sont en aucun cas limitatifs et peuvent varier suivant les configurations. Les formes, notamment celles des aimants, ne sont également en aucun cas limitatives.

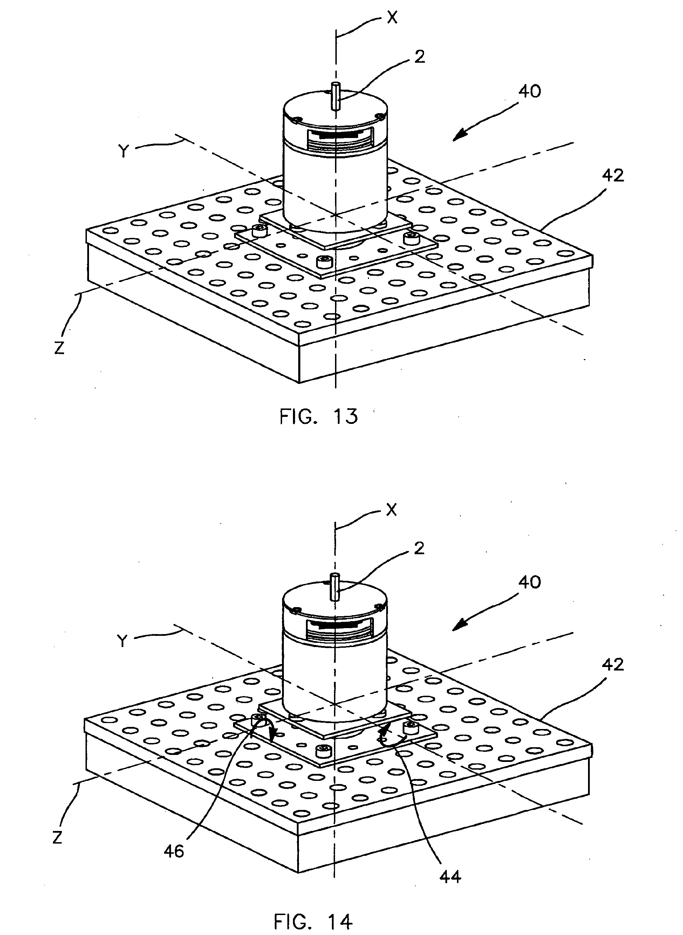

Sur la figure 13, on peut voir l'interface selon la présente invention intégrée à un dispositif 40 muni d'un châssis 42 sur lequel elle est montée apte à se translater selon des axes Y et Z., formant ainsi une commande de type « joystick ». Le dispositif peut comporter des systèmes à retour d'effort dans ces directions Y et Z.

Sur la figure 14, l'interface est montée apte à pivoter autour des axes Y et Z selon les flèches 44, 46 respectivement.

Ces intégrations peuvent, par exemple permettre d'ajouter des fonctionnalités à laquelle le bouton est déjà couplé.

On peut également prévoir d'intégrer dans le bouton un dispositif thermique pour simuler des variations de température, ce dispositif étant par exemple une cellule Peltier. Ainsi, dans le cas de la commande du système de chauffage-climatisation, par exemple, l'utilisateur commandant un abaissement de température ressentirait une impression de froid au niveau des doigts manipulant le bouton, et dans le cas où il commande une élévation de la température, ressentirait une impression de chaud au niveau de ses doigts manipulant le bouton. L'information ainsi transmise à l'utilisateur serait plus intuitive, l'utilisateur pourrait actionner le bouton uniquement en fonction de ce qu'il ressent. Le conducteur peut alors ne plus effectuer un contrôle visuel de l'écran, la sécurité de conduite et son confort en sont donc améliorés.

On peut également prévoir un dispositif générant des vibrations dans le bouton, permettant d'enrichir l'information rendue à l'utilisateur. Par exemple, si l'utilisateur a un appel téléphonique alors qu'il est en train de naviguer dans un menu, il peut être averti par une vibration.

On peut également prévoir de mettre en oeuvre des capteurs d'effort ou de couple pour mesurer l'effort ou le couple appliqué au bouton, et adapter la résistance à la valeur de cet effort ou de couple. Par exemple, dans le cas où un couple important est appliqué au bouton, la résistance à la rotation générée par le fluide peut être augmentée en générant un champ magnétique plus important.

Il est bien entendu que l'unité de commande peut recevoir d'autres informations que la position angulaire de l'arbre de rotation, l'accélération angulaire ou la vitesse angulaire du bouton pour commander le champ magnétique à appliquer au fluide, par exemple des informations portant sur, la pression exercée sur celui-ci, des informations concernant l'état du véhicule (par exemple, la vitesse, la position GPS, la température intérieure et extérieure, etc....).

Le retour appliqué peut également être indépendant d'informations extérieures en prenant par exemple une base temporelle. Le retour haptique ne dépend pas du mouvement effectué mais du temps. On peut par exemple appliquer des à-coups haptiques à une fréquence fixe et ce, quelle que soit la vitesse de rotation.

On peut également prévoir de coupler des informations extérieures et une base temporelle pour commander le système de génération de champ magnétique.

## Revendications

1. Interface haptique comportant un élément d'interaction avec un utilisateur, un arbre de rotation (2, 102, 202) d'axe longitudinal (X) duquel est solidaire en rotation ledit élément d'interaction avec l'utilisateur (1), un élément d'interaction avec un fluide (12, 112, 212), ledit élément d'interaction avec le fluide (12, 112, 212) étant solidaire en rotation dudit arbre (2, 102, 202), ledit fluide étant du type magnéto-rhéologique, un système de génération (6) d'un champ magnétique dans ledit fluide destiné à modifier la viscosité de celui-ci, et une unité de commande apte à générer des ordres audit système de génération de champ magnétique (6) de modifier le champ magnétique, l'élément d'interaction (12, 112, 212) avec le fluide, le fluide et le système de génération d'un champ magnétique étant reçus dans un boîtier (8), **caractérisée en ce que** ledit système de génération d'un champ magnétique comporte des moyens de génération d'un champ magnétique variable (20, 120, 220, 32) et des moyens de génération d'un champ magnétique permanent (18, 18" , 118, 218), lesdits moyens de génération d'un champ magnétique permanent (18, 18", 118, 218) étant disposés dans ledit boîtier (8) de telle sorte qu'ils provoquent une augmentation de la viscosité du fluide et un effort permanent résistant à l'élément d'interaction avec le fluide.

2. Interface haptique selon la revendication 1, les moyens de génération d'un champ magnétique permanent (18, 18" , 118, 218) étant disposés à l'intérieur du boîtier et/ou dans une paroi latérale du boîtier (8).

3. Interface haptique selon l'une des revendications 1 ou 2, comportant au moins un capteur de position angulaire, de vitesse angulaire et/ou d'accélération angulaire (28, 128, 228) dudit arbre (2, 102, 202), ladite unité de commande générant les ordres en fonction des informations fournies par ledit au moins un capteur de position, de vitesse et/ou d'accélération angulaire (28, 128, 228).

4. Interface haptique selon l'une des revendications 1 à 3, dans laquelle l'unité de commande génère des ordres au système de génération de champ magnétique à des intervalles de temps donnés fixes ou variables.

5. Interface haptique selon l'une des revendications 1 à 4, dans laquelle ledit système de génération (6) de champ magnétique génère un champ magnétique radial.

6. Interface haptique selon l'une des revendications 1 à 5, dans laquelle les moyens de génération d'un champ magnétique permanent (18, 18", 118, 218) comportent au moins un aimant permanent.

7. Interface haptique selon l'une des revendications 1 à 6, dans laquelle les moyens de génération d'un champ magnétique variable (20, 120, 220) comportent au moins une bobine électromagnétique.

8. Interface haptique selon l'une des revendications 1 à 7, dans laquelle l'élément d'interaction avec le fluide (12, 112) comporte au moins une paroi cylindrique (12.1, 112.1) de révolution d'axe longitudinal (X) et un fond en matériau amagnétique (12.2), ledit fond (12.2) étant fixé à l'arbre de rotation (2, 102, 202), le fluide venant en contact sur une face intérieure et une face extérieure de ladite paroi latérale (12.1, 112.1).

9. Interface haptique selon la revendication 8, dans laquelle l'élément d'interaction (12) avec le fluide comporte plusieurs parois latérales (12.1', 12.1") concentriques espacées les unes des autres et solidaires du fond en matériau amagnétique (12.2).

10. Interface haptique selon l'une des revendications 1 à 9, dans laquelle les moyens de génération d'un champ magnétique permanent sont disposés à l'intérieur de l'élément d'interaction avec le fluide (12), immobiles par rapport au boîtier et dans laquelle les moyens de génération d'un champ magnétique variable (20) sont disposés à l'intérieur de l'élément d'interaction avec le fluide (12), immobiles par rapport au boîtier.

11. Interface haptique selon la revendication 9, dans laquelle les moyens de génération d'un champ magnétique permanent (18") sont disposés entre deux parois latérales concentriques (12.1', 12.1") de la cloche (12) et sont immobiles par rapport au boîtier.

12. Interface haptique selon l'une des revendications 1 à 9, dans laquelle les moyens de génération d'un champ magnétique permanent sont fixés sur l'élément d'interaction avec le fluide (12, 112, 212) et les moyens de génération d'un champ magnétique (20, 120, 220) variable sont immobiles par rapport au boîtier.

13. Interface haptique selon la revendication 12, dans laquelle les moyens de génération d'un champ magnétique variable (20, 32) sont disposés à l'intérieur de l'élément d'interaction immobile par rapport au boîtier.

14. Interface haptique selon l'une des revendications 1 à 9, dans laquelle les moyens de génération d'un champ magnétique permanent et les moyens de génération d'un champ magnétique variable sont fixés sur l'élément d'interaction avec le fluide.

15. Interface haptique selon l'une des revendications 1 à 14, dans laquelle l'arbre traverse (102, 202) le système de génération de champ magnétique, et ladite interface comportant une tige (103) traversant de part en part l'arbre (102), ladite tige étant est apte à se déplacer longitudinalement et un dispositif de détection (134) du déplacement de ladite tige (103) étant prévu.

16. Interface haptique selon l'une des revendications 1 à 15, dans laquelle le capteur de position, de vitesse ou d'accélération angulaire (28, 128, 228) est prévu à une extrémité longitudinale de l'arbre et comporte une partie solidaire en rotation de l'arbre et une partie immobile par rapport à l'arbre, par exemple la partie solidaire de l'arbre (2, 102, 202) étant une roue optique et la partie immobile étant une fourche optique.

17. Interface haptique selon l'une des revendications précédentes, comportant un dispositif apte à faire vibrer l'élément d'interaction avec l'utilisateur et/ou un dispositif thermique apte à modifier la température de l'élément d'interaction avec l'utilisateur, le dispositif thermique comportant par exemple au moins une cellule Peltier.

18. Ensemble haptique comportant un châssis et l'interface selon l'une des revendications précédentes, montée sur ce châssis (42), ladite interface étant mobile selon l'axe (X) de l'arbre.

19. Ensemble haptique selon la revendication 18, dans lequel l'interface est mobile en translation selon au moins une direction orthogonale (Y, Z) à l'axe longitudinal (X) et/ou est mobile en rotation autour d'au moins une direction orthogonale (Y, Z) à l'axe longitudinal (X).

20. Ensemble haptique selon la revendication 19, comportant des dispositifs à retour d'effort pour opposer une résistance lors d'un mouvement le long d'au moins un axe orthogonal à l'axe longitudinal ou autour de celui-ci.

## Patentansprüche

1. Haptische Schnittstelle, enthaltend ein Element zur Interaktion mit einem Nutzer, eine Drehwelle (2, 102, 202) mit Längsachse (X), mit der das Element zur Interaktion mit dem Nutzer (1) drehfest verbunden ist, ein Element zur Interaktion mit einem Fluid (12, 112, 212), wobei das Element zur Interaktion mit einem Fluid (12, 112, 212) drehfest mit der Welle (2, 102, 202) verbunden ist, wobei das Fluid magneto-rheologischer Art ist, ein System (6) zum Erzeugen eines Magnetfeldes in dem Fluid, das dazu bestimmt ist, die Viskosität desselben zu verändern, und eine Steuereinheit, die dazu geeignet ist, dem System (6) zum Erzeugen des Magnetfeldes Befehle zu erteilen, um das Magnetfeld zu verändern, wobei das Element (12, 112, 212) zur Interaktion mit dem Fluid, das Fluid und das System zum Erzeugen eines Magnetfeldes in einem Gehäuse (8) aufgenommen sind, **dadurch gekennzeichnet, dass** das System zum Erzeugen eines Magnetfeldes Mittel zum Erzeugen eines veränderlichen Magnetfeldes (20, 120, 220, 32) und Mittel zum Erzeugen eines permanenten Magnetfeldes (18, 18", 118, 218) aufweist, wobei die Mittel zum Erzeugen eines permanenten Magnetfeldes (18, 18", 118, 218) in dem Gehäuse (8) so angeordnet sind, dass sie eine Erhöhung der Viskosität des Fluids und eine permanente Widerstandskraft gegen das Element zur Interaktion mit dem Fluid bewirken.

2. Haptische Schnittstelle nach Anspruch 1, wobei die Mittel zum Erzeugen eines permanenten Magnetfeldes (18, 18", 118, 218) innerhalb des Gehäuses und/oder in einer Seitenwand des Gehäuses (8) angeordnet sind.

3. Haptische Schnittstelle nach einem der Ansprüche 1 oder 2, enthaltend zumindest einen Winkelpositions-, Winkelgeschwindigkeits- und/oder Winkelbeschleunigungssensor (28, 128, 228) für die Welle (2, 102, 202), wobei die Steuereinheit Befehle in Abhängigkeit von den Informationen erzeugt, die von dem zumindest einen Winkelpositions-, Winkelgeschwindigkeits- und/oder Winkelbeschleunigungssensor (28, 128, 228) bereitgestellt werden.

4. Haptische Schnittstelle nach einem der Ansprüche 1 bis 3, wobei die Steuereinheit dem System zum Erzeugen eines Magnetfeldes Befehle in festen oder variablen vorgegebenen Zeitintervallen erteilt.

5. Haptische Schnittstelle nach einem der Ansprüche 1 bis 4, wobei das System zum Erzeugen (6) eines Magnetfeldes ein radiales Magnetfeld erzeugt.

6. Haptische Schnittstelle nach einem der Ansprüche 1 bis 5, wobei die Mittel zum Erzeugen eines permanenten Magnetfeldes (18, 18", 118, 218), zumindest einen Permanentmagneten aufweisen.

7. Haptische Schnittstelle nach einem der Ansprüche 1 bis 6, wobei die Mittel zum Erzeugen eines variablen Magnetfeldes (20, 120, 220) zumindest eine elektromagnetische Spule aufweisen.

8. Haptische Schnittstelle nach einem der Ansprüche 1 bis 7, wobei das Element zur Interaktion mit dem Fluid (12, 112) zumindest eine zylindrische Umlaufwand (12.1, 112.1) mit einer Längsachse (X) und einen Boden aus nichtmagnetischem Material (12.2) aufweist, wobei der Boden (12.2) an die Drehwelle (2, 102, 202) befestigt ist, wobei das Fluid an einer Innenseite und an einer Außenseite der Seitenwand (12.1, 112.2) in Kontakt gelangt.

9. Haptische Schnittstelle nach Anspruch 8, wobei das Element (12) zur Interaktion mit dem Fluid mehrere konzentrische Seitenwände (12.1', 12.1") aufweist, die voneinander beabstandet und fest mit dem Boden aus nichtmagnetischem Material (12.2) verbunden sind.

10. Haptische Schnittstelle nach einem der Ansprüche 1 bis 9, wobei die Mittel zum Erzeugen eines permanenten Magnetfeldes innerhalb des Elements (12) zur Interaktion mit dem Fluid angeordnet sind, gegenüber dem Gehäuse unbeweglich sind und wobei die Mittel zum Erzeugen eines variablen Magnetfeldes (20) innerhalb des Elements (12) zur Interaktion mit dem Fluid angeordnet und gegenüber dem Gehäuse unbeweglich sind.

11. Haptische Schnittstelle nach Anspruch 9, wobei die Mittel zum Erzeugen eines permanenten Magnetfeldes (18") zwischen zwei konzentrischen Seitenwänden (12.1', 12.1") der Glocke (12) angeordnet und gegenüber dem Gehäuse unbeweglich sind.

12. Haptische Schnittstelle nach einem der Ansprüche 1 bis 9, wobei die Mittel zum Erzeugen eines permanenten Magnetfeldes an das Element zur Interaktion mit dem Fluid (12, 112, 212) befestigt sind und die Mittel zum Erzeugen eines variablen Magnetfeldes (20, 120, 220) gegenüber dem Gehäuse unbeweglich sind.

13. Haptische Schnittstelle nach Anspruch 12, wobei die Mittel zum Erzeugen eines variablen Magnetfeldes (20, 32) innerhalb des Interaktionselements angeordnet sind, das gegenüber dem Gehäuse unbeweglich ist.

14. Haptische Schnittstelle nach einem der Ansprüche 1 bis 9, wobei die Mittel zum Erzeugen eines permanenten Magnetfeldes und die Mittel zum Erzeugen eines variablen Magnetfeldes an das Element zur Interaktion mit dem Fluid befestigt sind.

15. Haptische Schnittstelle nach einem der Ansprüche 1 bis 14, wobei die Welle (102, 202) sich durch das System zum Erzeugen eines Magnetfeldes erstreckt, wobei die Schnittstelle eine Stange (103) aufweist, die sich auf beiden Seiten durch die Welle (102) erstreckt, wobei die Stange dazu geeignet ist, sich longitudinal zu verlagern, und wobei eine Erfassungsvorrichtung (134) zum Erfassen der Verlagerung der Stange (103) vorgesehen ist.

16. Haptische Schnittstelle nach einem der Ansprüche 1 bis 15, wobei der Winkelpositions-, Winkelgeschwindigkeits- oder Winkelbeschleunigungssensor (28, 128, 228) an einem Längsende der Welle vorgesehen ist und einen drehfest mit der Welle verbundenen Abschnitt und einen gegenüber der Welle unbeweglichen Abschnitt aufweist, wobei beispielsweise der fest mit der Welle (2, 102, 202) verbundene Abschnitt ein optisches Rad ist und der unbewegliche Abschnitt eine optische Gabel ist.

17. Haptische Schnittstelle nach einem der vorangehenden Ansprüche, enthaltend eine Vorrichtung, die dazu geeignet ist, das Element zur Interaktion mit dem Nutzer vibrieren zu lassen, und/oder eine thermische Vorrichtung, die dazu geeignet ist, die Temperatur des Elements zur Interaktion mit dem Nutzer zu verändern, wobei die thermische Vorrichtung beispielsweise zumindest eine Peltier-Zelle aufweist.

18. Haptische Baugruppe mit einem Rahmen und der Schnittstelle nach einem der vorangehenden Ansprüche, die an diesen Rahmen (42) angebracht ist, wobei die Schnittstelle entlang der Achse (X) der Welle beweglich ist.

19. Haptische Baugruppe nach Anspruch 18, wobei die Schnittstelle entlang zumindest einer zur Längschase (X) orthogonal verlaufenden Richtung (Y, Z) translatorisch verschiebbar ist und/oder um zumindest eine zur Längsachse (X) orthogonal verlaufende Richtung (Y; Z) herum drehbar ist.

20. Haptische Baugruppe nach Anspruch 19, enthaltend Kraftrückkopplungsvorrichtungen zum Entgegensetzen einer Widerstandskraft bei einer Bewegung entlang zumindest einer orthogonal zur Längsachse verlaufenden Achse oder um diese herum.

## Claims

1. Haptic interface comprising an element that interacts with a user, a rotation shaft (2, 102, 202) with a longitudinal axis (X) to which said user interaction element (1) is fixed in rotation, an element that interacts with a fluid (12, 112, 212), said fluid interaction element (12, 112, 212) being fixed in rotation to said shaft (2, 102, 202), said fluid being of magneto-rheological type, a system (6) for generating a magnetic field in said fluid designed to modify the viscosity of the fluid, a control unit capable of generating orders to said magnetic field generation system (6) so as to modify the magnetic field, the interaction element (12, 112, 212), the fluid and the system for generating a magnetic field being in a housing (8), **characterized in that** said system for generating a magnetic field comprises means of generating a variable magnetic field (20, 120, 220,32) and means of generating a permanent magnetic field, said means of generating a permanent magnetic field (18, 18", 118, 218) being arranged in said housing (8) such that they provoke an increase of the viscosity of the fluid and a permanent force resisting to the fluid interaction element.

2. Haptic interface according to claim 1, the means of generating a permanent magnetic field (18, 18", 118, 218) being arranged inside the housing and/or in a housing sidewall (8).

3. Haptic interface according to either claim 1 or 2, comprising at least one angular position, angular velocity and/or angular acceleration sensor (28, 128, 228) of said shaft (2, 102, 202), said control unit generating orders as a function of information provided by said at least one angular position, velocity and/or acceleration sensor (28, 128, 228).

4. Haptic interface according to one of claims 1 to 3, in which said control unit generates orders to the magnetic field generation system at given fixed or variable time intervals.

5. Haptic interface according to one of claims 1 to 4, in which said system (6) for generating a permanent magnetic field (18, 18", 118, 218) generates a radial magnetic field.

6. Haptic interface according to one of claims 1 to 5, in which the means of generating a permanent magnetic field (18, 18", 118, 218) comprise at least one permanent magnet.

7. Haptic interface according to one of claims 1 to 6, in which the means of generating a variable magnetic field (20, 120, 220) comprise at least an electromagnetic coil.

8. Haptic interface according to one of claims 1 to 7, in which the fluid interaction element (12, 112) comprises at least one cylindrical wall (12.1, 112.1) of revolution with a longitudinal axis (X) and a head made from a non-magnetic material (12.2), said head (12.2) being fixed to the rotation shaft (2, 102, 202), the fluid coming into contact on an inner face and an outer face of said sidewall (12.1, 112.1).

9. Haptic interface according to claim 8, in which the fluid interaction element (12) comprises several concentric sidewalls (12.1', 12.1") at a spacing from each other and fixed to the head made of non-magnetic material (12.2).

10. Haptic interface according to one of claims 1 to 9, in which the means of generating a permanent magnetic field are arranged inside the fluid interaction element (12), immobile relative to the housing and in which the means of generating a variable magnetic field (20) are arranged inside the fluid interaction element (12), immobile relative to the housing.

11. Haptic interface according to claim 9, in which the means of generating a permanent magnetic field (18") are arranged between two concentric sidewalls (12.1', 12.1") of the bell (12) and are immobile relative to the housing.

12. Haptic interface according to one of claims 1 to 9, in which the means of generating a permanent magnetic field are fixed on the fluid interaction element (12, 112, 212) and the means of generating a variable magnetic field (20, 120, 220) are immobile relative to the housing.

13. Haptic interface according to claim 12, in which the means of generating a variable magnetic field (20, 32) are arranged inside the interaction element that is immobile relative to the housing.

14. Haptic interface according to one of claims 1 to 9, in which the means of generating a permanent magnetic field and the means of generating a variable magnetic filed are fixed onto the fluid interaction element.

15. Haptic interface according to one of claims 1 to 14, in which the shaft (102, 202) passes through the magnetic field generation and said interface comprising a rod (103) passing through the shaft (102) from one side to the other, said rod being capable to move longitudinally and a device (134) for detecting displacement of said rod (103) being provided.

16. Haptic interface according to one of claims 1 to 15, in which the position, velocity or angular acceleration sensor (28, 128, 228) is provided at one shaft longitudinal end and comprises a part fixed in rotation with the shaft and a part immobile relative to the shaft, for example the part fixed on the shaft (2, 102, 202) is an optical wheel and the immobile part is an optical fork.

17. Haptic interface according to one of the previous claims, comprising a device capable of vibrating the user interaction element and/or a thermal device capable of modifying the temperature of the user interaction element, the thermal device comprisinf for example at least one Peltier cell.

18. Haptic assembly comprising a frame and the interface according to one of the previous claims mounted on this frame (42), said interface being free to move along the axis (X) of the shaft.

19. Haptic assembly according to claim 18, in which the interface is free to move in translation along at least one direction (Y, Z) orthogonal to the longitudinal axis (X) and/or is free to move in rotation about at least one direction (Y, Z) orthogonal to the longitudinal axis (X).

20. Haptic assembly according to claim 19, comprising force feedback devices to oppose a resistance during a movement along at least one axis orthogonal to or about the longitudinal axis.
